# EUROPEAN PATENT SPECIFICATION

(11) **EP 0 397 008 B1**
(45) Date of publication and mention of the grant of the patent: **02.02.1994**
(21) Application number: 90108243.8
(22) Date of filing: 30.04.1990
(51) Int. Cl.: F16C 1/26

(54) **Flexible cable provided with end connectors**
Flexibles Kabel mit Endverbindern
Câble flexible pourvu de connecteurs d'extrémité

(30) Priority: 12.05.1989 IT 5307789 U
(43) Date of publication of application: 14.11.1990
(73) Proprietor: IVECO FIAT S.p.A., 10156 Torino (IT)
(72) Inventor: Riva, Vittorio, I-10100 Torino (IT)
(74) Representative: Jorio, Paolo

(56) References cited:
- US-A- 4 238 974
- US-A- 4 333 361
- US-A- 4 790 205

## Description

This invention relates to a flexible cable provided with end connectors of improved type.

More particularly the invention relates to a flexible cable of the type comprising:
- an inner control cable, the opposing ends of which are arranged to be connected for example to the accelerator pedal and to the injection pump of a vehicle internal combustion engine;
- a flexible sheath, in the interior of which said inner control cable is supported in an axially slidable manner; and
- a pair of opposing end connectors, each of which is essentially fixed to the sheath to enable it to be fixed to respective support elements when in use.

The particularly severe working and environmental conditions under which flexible cables of the aforesaid type operate give rise to numerous problems which negatively affect the engine operation. Firstly, that end of the inner cable connected to the injection pump or rather to a lever thereof is subjected to considerable fatigue stress because of the positions which the lever can assume, and can rapidly deteriorate especially in that region between the connector and lever, due to the fact that this region cannot be enclosed within the sheath as the inner cable has to be able to move.

Further problems derive from the infiltration of dust, water and very small stones into the space between the sheath and inner cable, with consequent undesirable increase in the friction between them and reduced mobility of the inner cable within the sheath.

There is known from the document US-A-4 239 974 a push-pull cable terminal including a sleeve and a tube mutually connected by a ball joint. This latter comprises a ball element integral with the tuba, and a socket provided on a resilient socket tube. This latter is inserted into the sleeve, whereas the cable is secured to a cable rod slidably inserted into the tube. This socket tube allows a limited tilting angle of the ball joint.

The object of the present invention is to provide a flexible cable able to overcome the aforesaid problems of the known cables.

Said object is attained according to the present invention by a flexible cable assembly comprising an inner cable having two opposite ends arranged to be connected respectively to control means and actuator means, said inner cable being axially slidable in a flexible sheath having two opposite ends fixed to a pair of end connectors adapted to be fixed to relevant support elements, at least one of said connectors comprising a tubular sleeve having a first axial bore, a tube having a second axial bore, and a ball joint including a concave spherical seat carried by said sleeve and a spherical head integral with an end portion of said tube, said end portion extending from said spherical head in the direction away from said sleeve, said inner cable being movable within said first axial bore and said second axial bore, said ball joint enabling a tilting movement of said tube with respect to said sleeve and defining for said inner cable an exit trajectory from said connector contained within a cone having a predetermined angle at its vertex, said second axial bore having a diameter slightly greater than the diameter of said inner cable as to allow correct sliding thereof, characterised in that said spherical seat is integral with an outer end portion of said sleeve, the diameter of said second axial bore being substantially minor than the diameter of said first axial bore, the end of said second axial bore communicating with said first bore having a progressively increasing diameter as to define a convex blending and guide surface facilitating the sliding of said inner cable in any tilting position of said tube.

The present invention will be more apparent from the description of a preferred embodiment thereof given hereinafter by way of non-limiting example with reference to the accompanying drawings in which:
Figure 1 is a partly sectional simplified view of a cable constructed in accordance with the present invention; and
Figure 2 is a section through some details of Figure 1 in an enlarged scale.

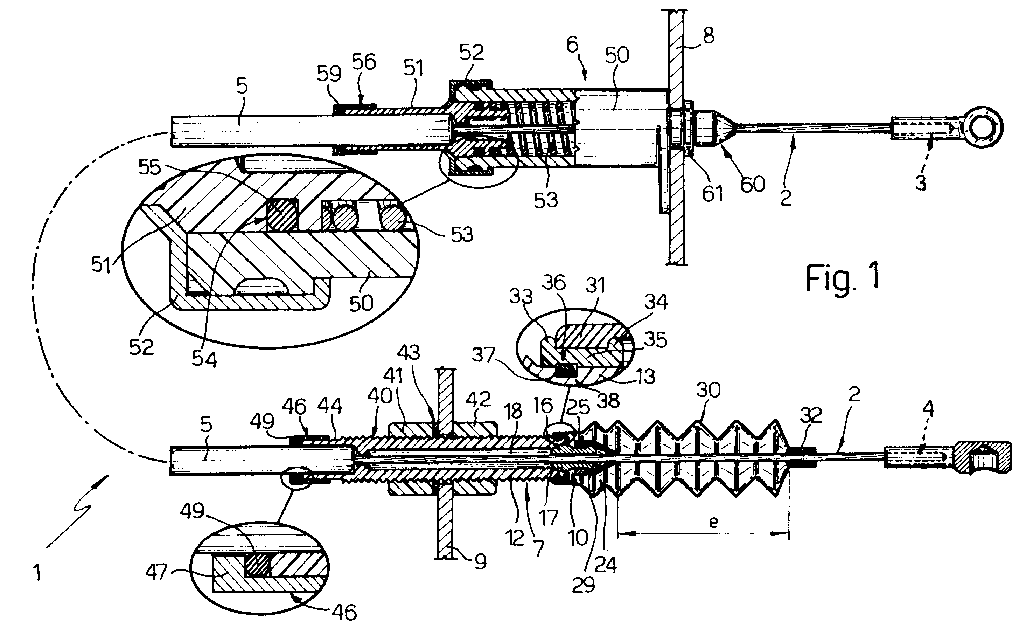

In Figure 1 the, reference numeral 1 indicates overall a flexible cable particularly but not exclusively usable for connecting the accelerator pedal to the control lever of the injection pump of an engine installed in a vehicle, preferably an industrial vehicle. The cable 1 is essentially of the type comprising:
- an inner cable 2, the opposing ends 3, 4 of which are arranged to be connected to said pedal and lever respectively;
- a flexible sheath 5 of conventional type, in the interior of which inner cable 2 is supported in an axially slidable manner;
   and
- a pair of opposing end connectors 6, 7, each of which is essentially fixed to the sheath 5 to enable it, when in use, to be fixed to respective support elements indicated overall by 8 and 9.

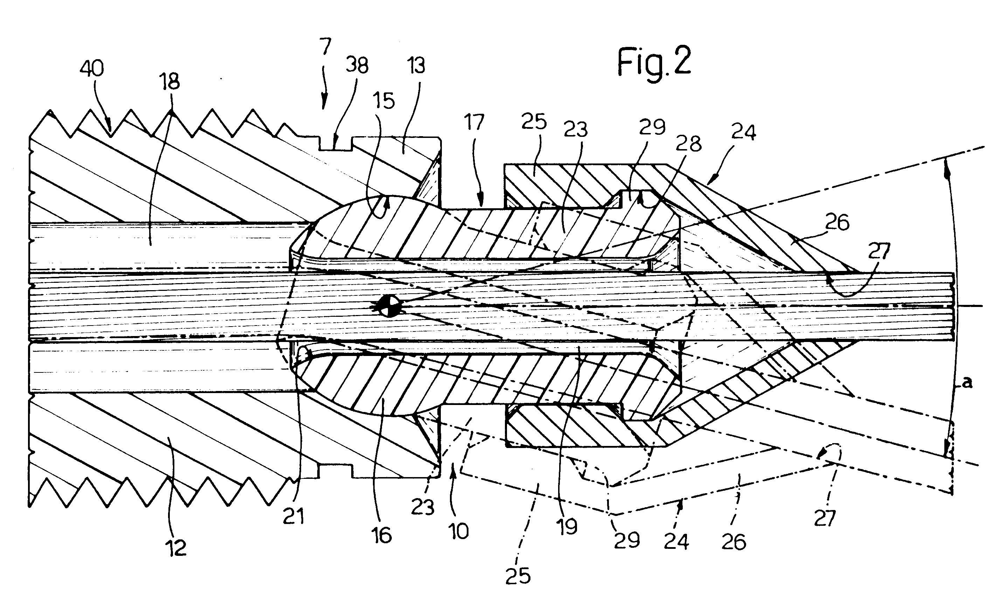

According to the present invention the connector 7 is provided at its outer end with a ball joint (see also Figure 2) which houses the inner cable 2 and defines with this latter an exit trajectory from the connector 7, which trajectory is contained within a cone having a predetermined angle (a) at its vertex.

With particular reference to Figure 2, the connector 7 comprises a tubular sleeve 12 within which the inner cable 2 is mobile and which is provided with an end portion 13 comprising a concave seat 15 defined by a spherical surface and housing the spherical head 16 of a tube 17, said seat 15 and head 16 forming said ball joint 10.

The sleeve 12 has an axial through bore 18 of diameter greater than the diameter of the through bore 19 in the tube 17 of the joint 10, this latter bore 19 being of greater diameter than the inner cable 2 to allow correct sliding of the inner cable 2. In addition, at that end which communicates with the bore 18, the bore 19 of the spherical head 16 has a progressively increasing diameter so as to form a convex blending and guide surface (21) which when in use facilitates the sliding of the inner cable 2 by preventing it from jamming in the spherical head 16 whenever the axis of the tube 17 is at its maximum angle to the axis of the sleeve 12 (see the position of the tube 17 indicated by dashed and dotted lines in Figure 2).

The tube 17 is provided with an end portion 23 extending from the spherical head 16 in the direction away from the sleeve 12 and beyond the end portion 13 of this latter.

A cap 24 of elastically deformable material such as rubber is mounted over the end portion 23 of the tube 17. The cap 24 consists essentially of a tubular portion 25 with its inner diameter essentially equal to the outer diameter of the portion 23 of the tube 17, and a hollow conical portion 26 with a through end hole 27 the diameter of which is essentially equal to the diameter of the inner cable 2. In the connection region between its portions 25 and 26 the cap 24 comprises an annular groove 28 engaged by an annular projection 29 which extends radially outwards from the end portion 23 of the tube 17.

With reference to Figure 1 the connector 7 is provided with a tubular bellows 30 the opposite ends 31, 32 of which are made rigid with the end portion 13 of the sleeve 12 and with the inner cable 2 respectively, so as to provide permanent protection against the external agents to that portion of the inner cable 2 extending beyond the cap 24, through a distance (e) which exceeds that distance through which, when in use, the inner cable moves relative to the connector 7 by the effect of the command which it receives from the accelerator pedal.

The end 31 of the bellows 30 is supported between two radial end projections 33, 34 provided on a rigid ring 35 which internally comprises an annular groove 36 partially engaged by an elastic ring 37 substantially housed in an annular groove (38) deeper than the groove 36 and provided in the end portion 13 of the sleeve 12.

The end 32 of the bellows 30 has a diameter less than the diameter of the inner cable 2 so as to adhere perfectly to this latter and to move rigidly with it when in use.

The sleeve 12 is provided externally with a thread 40 and when in use is fixed on the support element 9 by two nuts 41, 42 and a washer 43, choosing the most suitable position.

At the opposite end to the end portion 13 the sleeve 12 comprises a further end portion 44, the inner diameter of which is substantially equal to the outer diameter of the sheath 5. Said portion 44 receives one end of the sheath 5 and is surrounded by a fixing ring 46 provided with a radial projection 47, the inner diameter of which is slightly greater than the outer diameter of the sheath 5. Between the abutting surfaces of the portion 44 of the sleeve 12 and the projection 47 of the ring 46 there is interposed an elastic ring 49 which when in use adheres perfectly both to the sheath 5 and to those surfaces of said ring 46 and portion 44 which face it. On installation, radial pressure is applied to the fixing ring 46 (for example by a tool with a hexagonal cavity) to mechanically secure it to the end portion 44 of the sleeve 12.

The connector 6 is substantially of conventional type, being provided with a tubular body 50 fixed to the support element 8 and housing a slider 51 which is retained by a cup 52 and is mobile against the elastic action of a cylindrical spring 53.

Compared with known connectors of the same type it can be seen that in that part of the slider 51 contained within the body 50 there is an annular groove 54 housing an elastic ring 55. In addition a fixing ring 56 and an elastic ring 59, which are substantially identical with the fixing ring 46 and elastic ring 49 described heretofore with reference to the connector 7, are mounted over that end portion of the slider 51 which extends outside the tubular body 50. The connector 6 is also provided with a protection cap 60, which is identical to the cap 24 described with reference to the connector 7 and is installed on that end 61 at which the connector 6 is fixed to the support element 8, on that side of this latter facing the end 3.

From the operational viewpoint the flexible cable 1 behaves exactly as known cables of the same type, in that the position of the accelerator pedal, which is connected to the end 3 of the inner cable 2, is transmitted by the inner cable 2 to the injection pump lever, which is connected to the end 4.

However it is apparent from an examination of the characteristics of the flexible cable 1 that it attains the aforesaid objects.

Firstly, the ball joint 10 enables the inner cable 2 to adapt, when in use, to the various positions assumed by the injection pump lever, consequently reducing the effort which has to be expended on the inner cable 2.

The cap 24 not only guides the inner cable 2 for a further distance beyond the ball joint 10 but also prevents to a considerable extent any undesirable material such as dust, water, very small stones etc. present within the chamber delimited by the bellows 30 from depositing in the region in which the inner cable 2 emerges from the tube 17 of the ball joint 10, thus avoiding any jamming of the inner cable.

The method used for fixing the ends 31, 32 of the bellows 30 to the sleeve 12 and inner cable 2 respectively further makes any infiltration of undesirable material into the region defined by the bellows difficult.

In this respect, the end 31 is well shielded externally by the annular projections 33, 34 of the ring 35, whereas internally it cooperates with the elastic ring 37, which provides a good seal.

In addition the presence of the ring 35 supporting the end 31 means that if for some reason the bellows 30 has to be removed, there is no danger of damage to the end 31 if makeshift means (such as a knife, screwdriver etc.) are used to separate it from the respective end portion 13 of the sleeve 12.

Because of the fact that the end 32 of the bellows 30 adheres tightly to the inner cable 2 and therefore moves together with it, the said portion (e) of the inner cable is maintained permanently in good condition, thus allowing correct movement without any fear of jamming in the ball joint 10.

Finally, entry of undesirable material between the sheath 5 and inner cable 2 is also effectively hindered by the elastic rings 46 and 56, the elastic ring 55 interposed between the slider 51 and body 53, and finally the cap 60.

It is apparent that modifications can be made to the described flexible cable 1 without leaving the present invention.

For example the ball joint 10 could also be provided in the connector 6.

## Claims

1. A flexible cable assembly comprising an inner cable (2) having two opposite ends (3, 4) arranged to be connected respectively to control means and actuator means, said inner cable (2) being axially slidable in a flexible sheath (5) having two opposite ends fixed to a pair of end connectors (6, 7) adapted to be fixed to respective support elements (8, 9), at least one (7) of said connectors (6, 7) comprising a tubular sleeve (12) having a first axial bore (18), a tube (17) having a second axial bore (19), and a ball joint (10) including a concave spherical seat (15) carried by said sleeve (12) and a spherical head (16) integral with an end portion (23) of said tube (17), said end portion (23) extending from said spherical head (16) in the direction away from said sleeve (12), said inner cable (2) being movable within said first axial bore (18) and said second axial bore, said ball joint (10) enabling a tilting movement of said tube (17) with respect to said sleeve (12) and defining for said inner cable (2) an exit trajectory from said connector (7) contained within a cone having a predetermined angle (a) at its vertex, said second axial bore (19) having a diameter slightly greater than the diameter of said inner cable (2) as to allow correct sliding thereof, characterized in that said spherical seat (15) is integral with an outer end portion (13) of said sleeve (12), the diameter of said second axial bore (19) being substantially minor than the diameter of said first axial bore (18), the end of said second axial bore (19) communicating with said first bore (18) having a progressively increasing diameter so as to define a convex blending and guide surface (21) facilitating the sliding of said inner cable (2) in any tilting position of said tube (17).

2. A cable assembly as claimed in claim 1, characterized in that said end portion (23) of said tube (17) is coupled with a first portion (25) of a protection cap (24) made of an elastically deformable material, said cap (24) including a second portion (26) having a through hole (27) for the passage of said inner cable (2), the diameter of said through hole (27) being essentially equal to the diameter of said inner cable (2).

3. A cable assembly as claimed in claim 2, characterized in that said first portion (25) of said cap (24) is tubular with an inner diameter essentially equal to to the outer diameter of said end portion (23) of said tube (17), said second portion being a hollow conical portion (26) coaxial with said tubular portion (25), the connection region between said tubular portion (25) and said conical portion (26) comprising an annular groove (28) engaged by an annular projection (29) extending outward from said end portion (23) of said tube (17).

4. A cable assembly as claimed in any previous claim, characterized in that a tubular bellows (30) is provided with a first end (31) made rigid with said outer end portion (13) of said sleeve (12), another end (32) of said bellows (30) being made rigid with the end of said inner cable (2), so as to provide permanent protection against the external agents to that portion of said inner cable (2) extending through a distance e which exceeds that distance through which, when in use, the inner cable (2) moves relative to the connector (7).

5. A cable as claimed in claim 4, characterised in that the end (31) of said bellows (30) rigid with said sleeve (12) is supported between two radial end projections (33, 34) provided on a rigid ring (35) which internally comprises an annular groove (36) partially engaged by an elastic ring (37) which is substantially housed in an annular groove (38) provided peripherally within said end portion (13) of said sleeve (12).

6. A cable as claimed in claims 5, characterised in that said annular groove (38) provided in said end portion (13) of said sleeve (12) is deeper than said annular groove (36) provided in the interior of said rigid ring (35).

7. A cable as claimed in claim 5 or 6, characterised in that that end (32) of said bellows (30) rigid with said inner cable (2) has a diameter less than the diameter of said inner cable (2) so that it adheres perfectly to this latter to move rigidly therewith when in use.

8. A cable as claimed in any one of the preceding claims in which one (6) of said connectors (6, 7) is of the type provided with a tubular body (50) and housing a slider (51) which is retained partially within said tubular body (50) and is mobile against the elastic action of a cylindrical spring (53), characterised in that an elastic seal ring (55) is interposed between that part of said slider (51) contained within said body (50) and said body (50) itself.

9. A cable as claimed in any one of the preceding claims, characterised in that each portion of said connectors (6, 7) which is connected to said sheath (5) is surrounded by a fixing ring (46) provided with a radial projection (47), the inner diameter of which is slightly greater than the outer diameter of said sheath (5); between the abutting surfaces of each connector (6, 7) and the projection (47) on said fixing ring (46) there being interposed an elastic ring (49) which when in use adheres perfectly both to said sheath (5) and to those surfaces of said ring (46) and of said connectors (6, 7) which face it.

10. A cable as claimed in claim 9, characterised in that said fixing ring (46) is subjected to radial pressing to mechanically secure it to said portion (44) of said sleeve (12).

## Patentansprüche

1. Flexible Kabelanordnung mit einem inneren Kabel (2), das zwei gegenüberliegende Enden (3,4) aufweist, die vorgesehen sind zur Verbindung mit Steuer- und Betätigungseinrichtungen, welches innere Kabel (2) axial in einer flexiblen Hülle (5) gleitet, die zwei gegenüberliegende Enden aufweist, die an zwei Endverbindern (6,7) befestigt sind, die vorgesehen sind zur Befestigung an Stützelementen (8,9), wobei wenigstens einer (7) der Endverbinder (6,7) eine rohrförmige Hülse (12) umfaßt, die eine erste Axialbohrung (8,9), ein Rohr (17) mit einer zweiten Axialbohrung (19) und ein Kugelgelenk (10) umfaßt, das einen konkaven kugelförmigen Sitz (15) in der Hülse (12) und einen kugelförmigen Kopf (16) aufweist, der einstückig mit einem Endbereich (23) des Rohres (17) ausgebildet ist, welcher Endbereich (23) von dem kugelförmigen Kopf (16) in Richtung fort von der Hülse (12) verläuft, welches innere Kabel (2) innerhalb der ersten axialen Bohrung und der zweiten axialen Bohrung beweglich ist, welches Kugelgelenk (10) eine Kippbewegung des Rohres (17) in bezug auf die Hülse (12) gestattet und für das innere Kabel (2) eine Ausgangsbahn aus dem Verbinder (7) bildet, die innerhalb eines Kegels mit vorgegebenem spitzen Winkel (a) liegt, welche zweite axiale Bohrung (19) einen Durchmesser aufweist, der geringfügig größer als der Durchmesser des inneren Kabels (2) ist und dessen korrektes Gleiten erlaubt, dadurch **gekennzeichnet,** daß der kugelförmige Sitz (15) einstückig mit dem äußeren Endbereich (13) der Hülse (12) ausgebildet ist, daß der Durchmesser der zweiten axialen Bohrung (19) wesentlich kleiner als der Durchmesser der ersten axialen Bohrung (18) ist, daß das Ende der zweiten axialen Bohrung (19) mit der ersten axialen Bohrung (18) verbunden ist und einen progressiv zunehmenden Durchmesser aufweist, so daß eine konvexe Übergangs- und Führungfläche (21) gebildet wird, die das Gleiten des inneren Kabels (2) in jeder Neigungsposition des Rohres (17) erleichtert.

2. Kabelanordnung nach Anspruch 1, dadurch **gekennzeichnet,** daß der Endbereich (23) des Rohres (17) verbunden ist mit einem ersten Bereich (25) einer Schutzkappe (24) aus elastisch verformbarem Material, welche Kappe (24) einen zweiten Bereich (26) aufweist, der eine durchgehende Bohrung (27) für den Durchgang des inneren Kabels (2) aufweist, wobei der Durchmesser der durchgehenden Bohrung (25) im wesentlichen gleich dem Durchmesser des inneren Kabels (2) ist.

3. Kabelanordnung nach Anspruch 2, dadurch **gekennzeichnet,** daß der erste Bereich (25) der Kappe (24) rohrförmig ist und einen Innendurchmesser aufweist, der im wesentlichen gleich dem Außendurchmesser des Endbereich (23) des Rohres (17) ist, wobei der zweite Bereich ein hohler, kegelförmiger Bereich (26) ist, der koaxial zu dem rohrförmigen Bereich (25) angeordnet ist, wobei der Verbindungsbereich zwischen dem rohrförmigen Bereich (25) und dem kegelförmigen Bereich (26) eine ringförmige Nut (28) aufweist, die mit einem ringförmigen Vorsprung (29) zusammenwirkt, der sich nach außen von dem Endbereich (23) des Rohres (17) erstreckt.

4. Kabelanordnung nach einem der vorhergehenden Ansprüche, dadurch **gekennzeichnet,** daß ein rohrförmiger Balg (30) mit einem Ende (31) starr verbunden ist mit dem äußeren Endbereich (13) der Hülse (12), wobei ein anderes Ende (32) des Balges (30) fest verbunden ist mit dem Ende des inneren Kabels (2), so daß dauerhafter Schutz gegen äußere Mittel für den Bereich des inneren Kabels (2) geschaffen wird, der sich über einen Abstand (e) erstreckt, der den Abstand überschreitet, durch den im Gebrauch das innere Kabel (2) in bezug auf den Verbinder (7) bewegt wird.

5. Kabel gemäß Anspruch 4, dadurch **gekennzeichnet,** daß das Ende (31) des Balges (30), das fest mit der Hülse (12) verbunden ist, zwischen zwei radialen Endvorsprüngen (33,34) abgestützt ist, die auf einem starren Ring (35) ausgebildet sind, der im Inneren eine ringförmige Nut (36) aufweist, in die teilweise ein elastischer Ring (37) eingreift, der im wesentlichen in einer ringförmigen Nut (38) aufgenommen ist, die umlaufend im Endbereich (13) der Hülse (12) vorgesehen ist.

6. Kabel nach Anspruch 5, dadurch **gekennzeichnet,** daß die ringförmige Nut (38) in dem Endbereich (13) tiefer ist als die ringförmige Nut (36) im Inneren des starren Ringes (35).

7. Kabel nach Anspruch 5 oder 6, dadurch **gekennzeichnet,** daß das Ende (32) des Balges (30), das fest mit dem inneren Kabel (2) verbunden ist, einen Durchmesser aufweist, der kleiner als der Durchmesser des inneren Kabels (2) ist, so daß es perfekt auf dem Kabel anhaftet und sich im Gebrauch einheitlich zusammen mit diesem bewegt.

8. Kabel nach einem der vorhergehenden Ansprüche, bei dem einer (6) der Verbinder (6,7) mit einem rohrförmigen Körper (50) versehen ist und ein Gleitstück (51) aufnimmt, das teilweise innerhalb des rohrförmigen Körpers (50) gehalten ist und gegen die elastische Wirkung einer zylindrischen Feder (53) beweglich ist, dadurch **gekennzeichnet,** daß ein elastischer Dichtring (55) zwischen dem Teil des Gleitstücks (51), das in dem Körper (50) enthalten ist und dem Körper (50) selbst liegt.

9. Kabel nach einem der vorhergehenden Ansprüche, dadurch **gekennzeichnet,** daß jeder Bereich der Verbinder (6,7), der mit der Hülle (5) verbunden ist, durch einen Befestigungsring (46) umgeben ist, der mit einem radialen Vorsprung (47) versehen ist, dessen Innendurchmesser etwas größer ist als der Außendurchmesser der Hülle (5), wobei zwischen den zusammentreffenden Flächen der Verbinder (6,7) und dem Vorsprung (47) auf dem Befestigungsring (46) ein elastischer Ring (49) liegt, der im Gebrauch vollständig sowohl an der Hülle (5) als auch an den Oberflächen des Ringes (46) und des Verbinders (6,7) anhaftet, die ihm gegenüberliegen.

10. Kabel nach Anspruch 9, dadurch **gekennzeichnet,** daß der Befestigungsring (46) einem radialen Druck ausgesetzt ist zur mechanischen Sicherung des Bereichs (44) der Hülse (12).

## Revendications

1. Un ensemble de câble flexible, comprenant un câble intérieur (2) dont deux extrémités opposées (3, 4) sont agencées de manière à être connectées respectivement à un moyen de commande et à un moyen d'actionnement, ledit câble intérieur (2) pouvant coulisser axialement dans une gaine flexible (5) dont deux extrémités opposées sont fixées à une paire de connecteurs d'extrémité (6, 7) aptes à être fixés à des éléments respectifs de support (8, 9), au moins l'un (7) desdits connecteurs (6, 7) comprenant un manchon tubulaire (12) comportant un premier alésage axial (18), un tube (17) comportant un deuxième alésage axial (19) et un joint à rotule (10) comportant un siège sphérique concave (15) porté par ledit manchon (12) et une tête sphérique (16) d'un seul tenant avec une partie d'extrémité (23) dudit tube (17), ladite partie d'extrémité (23) s'étendant depuis la tête sphérique (16) dans la direction qui s'éloigne dudit manchon (12), ledit câble intérieur (2) étant mobile à l'intérieur dudit premier alésage axial (18) et dudit deuxième alésage axial, ledit joint à rotule (10) permettant un mouvement d'inclinaison dudit tube (17) par rapport audit manchon (12) et définissant pour ledit câble intérieur (2), à partir dudit connecteur (7) une trajectoire de sortie contenue à l'intérieur d'un cône à angle au sommet prédéterminé (a), le diamètre dudit deuxième alésage axial (19) étant légèrement plus grand que le diamètre dudit câble intérieur (2) de manière à permettre un coulissement correct de celui-ci, caractérisé en ce que ledit siège sphérique (15) est d'un seul tenant avec une partie d'extrémité extérieure (13) dudit manchon (12), le diamètre dudit deuxième alésage axial (19) étant sensiblement plus petit que le diamètre dudit premier alésage axial (18), le diamètre (50) de l'extrémité dudit deuxième alésage axial (19) qui communique avec ledit premier alésage (18) croissant progressivement de façon à définir une surface convexe (21) de raccord et de guidage qui facilite le coulissement dudit câble intérieur dans une position inclinée quelconque dudit tube (17).

2. Un ensemble de câble selon la revendication 1, caractérisé en ce que ladite partie d'extrémité (23) dudit tube (17) est accouplée à une première partie (25) d'un capuchon de protection (24) en une matière élastiquement déformable, ledit capuchon (24) comportant une deuxième partie (26) où est ménagé un trou traversant (27) pour le passage dudit câble intérieur (2), le diamètre dudit trou (27) étant sensiblement égal au diamètre du câble intérieur (2).

3. Un ensemble de câble selon la revendication 2, caractérisé en ce que ladite première partie (25) du capuchon (24) est tubulaire, son diamètre intérieur étant essentiellement égal au diamètre extérieur de ladite partie d'extrémité (23) dudit tube (17), ladite deuxième partie étant une partie conique creuse (26) coaxiale à ladite partie tubulaire (25), la région de raccordement entre ladite partie tubulaire (25) et ladite partie conique (26) comprenant une gorge annulaire (28) dans laquelle est engagée une saillie annulaire (29) s'étendant vers l'extérieur à partir de ladite partie extérieure (23) dudit tube (17).

4. Un ensemble de câble selon une revendication précédente quelconque, caractérisé en ce qu'un soufflet tubulaire (30) comprend une première extrémité (31) qui est assemblée de façon rigide à ladite partie d'extrémité extérieure (13) dudit manchon (12), une autre extrémité (32) dudit soufflet (30) étant assemblée de façon rigide avec l'extrémité dudit câble intérieur (2) de façon à réaliser une protection permanente contre les agents externes pour la partie dudit câble intérieur (2) s'étendant a une distance e qui dépasse la distance dont le câble intérieur (2) se déplace, en service, par rapport au connecteur (7).

5. Un câble selon la revendication 4, caractérisé en ce que l'extrémité (31) dudit soufflet (30) assemblé de façon rigide audit manchon (12) est supportée entre deux saillies radiales d'extrémité (33, 34) disposées sur une bague rigide (35) qui comprend intérieurement une gorge annulaire (36) où vient partiellement s'engager une bague élastique (37) qui est logée sensiblement dans une gorge annulaire (38) ménagée à la périphérie à l'intérieur de ladite partie d'extrémité (13) dudit manchon (12).

6. Un câble selon la revendication 5, caractérisé en ce que ladite gorge annulaire (38) ménagée dans ladite partie d'extrémité (13) dudit manchon (12) est plus profonde que ladite gorge annulaire (36) ménagée dans l'intérieur de ladite bague rigide (35).

7. Un câble selon la revendication 5 ou 6, caractérisé en ce que le diamètre de l'extrémité (32) dudit soufflet (30) assemblé de façon rigide audit câble intérieur (2) est moins grand que le diamètre dudit câble intérieur (2) de sorte qu'il adhère parfaitement à ce dernier afin de se déplacer de façon rigide avec celui-ci en service.

8. Un câble selon l'une quelconque des revendications précédentes dans lequel l'un (6) desdits connecteurs (6, 7) est du type pourvu d'un corps tubulaire (50) et logeant un coulisseau (51) qui est retenu en partie à l'intérieur dudit corps tubulaire (50) et qui est mobile contre l'effet élastique d'un ressort cylindrique (53), caractérisé en ce qu'une bague élastique d'étanchéité (55) est interposée entre la partie dudit coulisseau (51) contenue à l'intérieur dudit corps (50) et ledit corps (50) lui-même.

9. Un câble selon l'une quelconque des revendications précédentes, caractérisé en ce que chaque partie desdits connecteurs (6, 7) qui est reliée à ladite gaine (5) est entourée par une bague de fixation (46) comportant une saillie radiale (47) dont le diamètre est un peu plus grand que le diamètre extérieur de ladite gaine (5); une bague élastique (49), qui adhère parfaitement en service tant à ladite gaine (5), qu'aux surfaces de ladite bague (46) et desdits connecteurs (6, 7) qui sont tournés vers elle, étant interposée entre la surface venant en butée de chaque connecteur (6, 7) et la saillie (47) de ladite bague de fixation (46).

10. Un câble selon la revendication 9, caractérisé en ce que ladite bague de fixation (46) est soumise à une compression radiale afin de la fixer mécaniquement sur ladite partie (44) dudit manchon (12).
